# EUROPÄISCHE PATENTSCHRIFT

(11) **EP 2 979 144 B1**
(45) Veröffentlichungstag und Bekanntmachung des Hinweises auf die Patenterteilung: **24.06.2020**
(21) Anmeldenummer: 14713838.2
(22) Anmeldetag: 28.03.2014
(51) Int. Cl.: G05B 19/418, G05B 19/042, H04L 12/40, H04L 29/08, H04L 29/06

(54) **FELDGERÄT, KOMMUNIKATIONS-CHIP UND VERFAHREN ZUM WEBZUGRIFF AUF EIN FELDGERÄT**
FIELD DEVICE, COMMUNICATION CHIP, AND METHOD FOR A WEB ACCESS TO A FIELD DEVICE
APPAREIL DE TERRAIN, PUCE DE COMMUNICATION ET PROCÉDÉ D'ACCÈS AU WEB SUR UN APPAREIL DE TERRAIN

(30) Priorität: 28.03.2013 DE 102013103242
(43) Veröffentlichungstag der Anmeldung: 03.02.2016
(73) Patentinhaber: Phoenix Contact GmbH & Co. KG, 32825 Blomberg (DE)
(72) Erfinder: LEßMANN, Gunnar, 33039 Nieheim (DE)
(74) Vertreter: Blumbach · Zinngrebe Patentanwälte PartG mbB
(86) Internationale Anmeldenummer: PCT/EP2014/056297
(87) Internationale Veröffentlichungsnummer: WO 2014/177327

(56) Entgegenhaltungen:
- EP-A1- 1 906 601
- EP-A1- 2 538 500
- EP-A2- 1 175 062
- DE-A1-102009 027 697
- DE-A1-102009 054 901
- DE-A1-102010 063 854
- US-A1- 2004 236 443
- US-B1- 7 058 693

## Beschreibung

Die Erfindung betrifft allgemein betrifft allgemein den Zugriff auf Feldgeräte mittels Webtechnologien und insbesondere ein Verfahren zum Zugreifen auf ein Feldgerät, ein Feldgerät und einen Kommunikations-Chip zum Einsatz in einem Feldgerät.

In der Automatisierungstechnik werden prozessnah Feldgeräte eingesetzt, um Prozessgrößen zu erfassen und/oder zu beeinflussen. Zu diesem Zweck sind Feldgeräte mit Sensoren und/oder Aktoren verbunden oder selbst als Sensoren oder Aktoren ausgebildet.

Aktuell hält Ethernet Einzug in die Feldebene. Der Kommunikationsstandard PROFINET ermöglicht dabei beispielsweise die Kommunikation von echtzeitkritischen Daten und anderer TCP/IP Kommunikation auf einer Leitung zur gleichen Zeit. Eine Anwendung der TCP/IP Kommunikation ist die Konfiguration, das Monitoring und die Diagnose von Feldgeräten über Web-Techniken wie http oder JavaScript. Anwender können bei Einsatz von PROFINET über die ohnehin vorhandene Ethernet-Schnittstelle des Gerätes mit einem Webbrowser auch entsprechende Einstell- und Diagnosemöglichkeiten nutzen.

Üblicherweise läuft in einem PROFINET-Feldgerät auf einem Kommunikations-Chip, wie zum Beispiel einem ERTEC-Chip der Firma Siemens, ein sogenannter PROFINET-Protokollstack. Dieser Stack wickelt das PROFINET-Kommunikationsprotokoll selbstständig ab. Der Stack stellt seine Dienste an einer Applikations-Schnittstelle zur Verfügung. Diese Dienste ermöglichen einer Geräteapplikation das Lesen und Schreiben von zyklischen Prozessdaten oder azyklischen Parameterwerten.

Es sind Feldgeräte, z.B. aus der DE 10 2009 027 697 A1 bekannt, welche zur Abwicklung von Anfragen eines mit einem Webbrowser ausgestatteten Bediengerätes mit einem Webserver ausgestattet sind. Durch Adressierung des jeweiligen Feldgerätes über eine zugeordnete URL-Adresse ist auf diese Weise eine Visualisierung von Informationen des jeweiligen Feldgerätes möglich.

Zur Realisierung eines solchen Webzugriffs auf ein Feldgerät muss sich der Gerätehersteller auf seinem Gerät mit Details zu Webservern und Webtechniken auseinander setzen, da die Geräteapplikation eine Schnittstelle zum Webserver benötigt. Dies ist jedoch in der Regel keine Kernkompetenz von Feldgeräteherstellern. Zudem erfordert der Webserver zusätzliche Rechenleistung, die der Geräteapplikation nicht mehr zur Verfügung steht.

Bei Bereitstellen eines Webzugriffs können Zugriffskonflikte auftreten, wenn beispielsweise eine Steuerungseinheit, wie zum Beispiel eine SPS (Speicherprogrammierbare Steuerung), und ein Web-Browser gleichzeitig auf ein Feldgerät zugreifen wollen. Diese Zugriffskonflikte müssen an der Schnittstelle zur Applikation aufgelöst werden. Ferner muss mit der Weiterentwicklung von IPV4 nach IPV6 auch die komplette Gerätearchitektur angepasst werden.

Der Erfindung liegt die Aufgabe zugrunde, einen Weg aufzuzeigen, wie ein Webzugriff auf ein Feldgerät vereinfacht und/oder verbessert werden kann, und wie insbesondere Nachteile der aus dem Stand der Technik bekannten Lösungen vermieden oder reduziert werden können.

Ein Kerngedanke der Erfindung ist darin zu sehen, die Web-Darstellung gegenüber der Geräteapplikation eines Feldgerätes als Industrial Ethernet Schnittstelle, insbesondere als PROFINET Schnittstelle, abzubilden. Zu diesem Zweck ist eine Applikationsschnittstelle zur Kommunikation mit der Geräte-Applikation vorgesehen, wobei an der Applikationsschnittstelle ein Industrial Ethernet Protokoll-Stack, insbesondere ein PROFINET-Protokoll-Stack, seine Dienste zur Verfügung stellt und der Geräteapplikation das Lesen und Schreiben von zyklischen Prozessdaten oder azyklischen Parameterwerten ermöglicht. Die Applikationsschnittstelle umfasst eine dem Webserver zugeordnete eigene logische Schnittstelle, so dass die Kommunikation zwischen Webserver und Geräteapplikation nicht über eine direkte Schnittstelle, sondern über den Industrial Ethernet Protokoll-Stack erfolgt.

Das oben genannte technische Problem wird zum einen durch die Merkmale des Anspruchs 1 gelöst.

Danach ist ein Verfahren zum Zugreifen auf ein Feldgerät vorgesehen, welches an einen für ein Industrial Ethernet Protokoll ausgebildeten Feldbus angeschlossen ist. Das Verfahren umfasst das Übertragen einer Anfrage von einem Webbrowser, welcher in einem an den Feldbus angeschlossenen Bediengerät ausgeführt wird, zu einem im Feldgerät ausgeführten Webserver. Die empfangene Anfrage wird im Feldgerät unter Verwendung eines im Feldgerät gespeicherten Protokoll-Stacks des Industrial Ethernet-Protokolls verarbeitet und eine Antwortinformation vom Webserver zum Webbrowser zurück übertragen.

Industrial Ethernet bezeichnet allgemein ein Ethernet-Protokoll zum Einsatz im Automatisierungs- und Prozessumfeld, welches bestimmten Echtzeitanforderungen genügt, und das dementsprechend auch als Echtzeit-Ethernet bezeichnet wird. Es fallen eine Reihe von Protokollen unter den Oberbegriff des Industrial Ethernet, so zum Beispiel PROFINET, SERCOS III, SafetyNET p, VARAN, EtherNet/IP, Ethernet Powerlink oder EtherCAT.

Es können verschiedene Arten von Anfragen vorgesehen sein, die jeweils unterschiedlichen Zwecken dienen, wie zum Beispiel einem Monitoring, einer Visualisierung, einer Parametrierung, einer Bedienung oder auch einem Engineering. Dementsprechend umfasst das Verarbeiten der empfangenen Anfrage im Feldgerät vorteilhaft das Bereitstellen von Prozessdaten, das Einstellen wenigstens eines Parameters, und/oder das Erstellen, Bearbeiten und/oder Ausführen einer Funktion einer Geräte-Applikation.

Die Kommunikation zwischen Webbrowser und Webserver erfolgt grundsätzlich über das transaktionsorientierte Hypertext Transfer Protokoll (http), wobei eine Transaktion vom Webbrowser als Client gestartet wird, indem dieser eine Anfrage (Request) erzeugt und an den Webserver sendet. Der Webserver schließt die Transaktion ab, indem er eine Antwort (Response) generiert und zurück and en Client sendet. Die Antwort wird vom Webserver vorzugsweise als Webseite bereitgestellt. Moderne Browser bieten über einen als XMLHttpRequest bezeichneten Mechanismus die Möglichkeit, direkt aus einer im Browser ablaufenden JavaScript-Anwendung http-Anfragen (http Requests) zu senden und http-Antworten (http Responses) entgegen zu nehmen.

In einer besonders vorteilhaften Ausführungsform umfasst das Verarbeiten der empfangenen Anfrage im Feldgerät ein Weiterleiten der Anfrage vom Webserver zu einer mit einer im Feldgerät ausgeführten Geräteapplikation verbundenen Applikationsschnittstelle über den im Feldgerät gespeicherten Industrial Ethernet Protokoll-Stack und ein Übertragen einer Antwort auf die Anfrage von der Applikationsschnittstelle über den Protokoll-Stack zu dem Webserver. Zu diesem Zweck umfasst die Applikationsschnittstelle vorteilhaft eine dem Webserver zugeordnete individuelle logische Schnittstelle, wobei der Webserver gegenüber der Applikationsschnittstelle als Industrial Ethernet Client wirkt.

Es kann vorzugsweise ein Parametrierungsspeicher im Feldgerät vorgesehen sein, in welchem beispielsweise eine Parameterdatei gespeichert ist. In diesem Fall kann das Verarbeiten der empfangenen Anfrage im Feldgerät ferner vorteilhaft das Zugreifen auf diesen Parametrierungsspeicher umfassen. Ein solcher Parametrierungsspeicher bietet ferner den besonderen Vorteil, dass eine Parameterdatei über Ethernet Protokolle wie zum Beispiel FTP auf andere Geräte gleichen Typs kopiert werden kann. Damit ist die einfache Versorgung weiterer Geräte mit den gleichen Parametern möglich.

Vorzugsweise werden beim Hochlaufen der Geräteapplikation die im Parametrierungsspeicher gespeicherten Parameter über entsprechende Write-Dienste des Industrial Ethernet Protokoll-Stacks an die Geräteapplikation als Initialwerte übergeben und bei Änderungen konsistent gehalten. Auf diese Weise muss die Geräteapplikation vorteilhaft keine eigene Parameterspeicherung implementieren.

Besonders vorteilhaft wird als Industrial Ethernet Protokoll ein PROFINET-Protokoll eingesetzt, so dass der im Feldgerät gespeicherte Protokoll-Stack dementsprechend ein PROFINET-Protokoll-Stack ist.

Das oben genannte technische Problem wird auch durch die Merkmale des Anspruchs 6 gelöst.

Danach ist ein zum Betreiben an einem für ein Industrial Ethernet Protokoll ausgebildeten Feldbus ausgebildetes Feldgerät vorgesehen, welches wenigstens eine Ethernet-Schnittstelle zum Anschließen an den Feldbus, einen mit der Ethernet-Schnittstelle verbundenen Webserver, einen Speicher mit einem darin gespeicherten Protokoll-Stack des Industrial-Ethernet-Protokolls, und eine Applikations-Schnittstelle zur Kommunikation mit einer auf dem Feldgerät ausführbaren Geräte-Applikation umfasst, wobei die Applikationsschnittstelle zur Kommunikation mit dem Webserver unter Verwendung des im Feldgerät gespeicherten Protokoll-Stacks des Industrial Ethernet-Protokolls ausgebildet ist.

Wie bereits oben beschrieben umfasst die Applikationsschnittstelle vorteilhaft eine dem Webserver zugeordnete individuelle logische Schnittstelle und ist dazu ausgebildet, dem Webserver als Industrial Ethernet Client zu behandeln. In einer bevorzugten Ausführungsform ist das Feldgerät als PROFINET-Feldgerät ausgebildet, wobei dementsprechend der gespeicherte Protokoll-Stack ein PROFINET-Protokoll-Stack ist.

In einer besonders bevorzugten Ausführungsform umfasst das Feldgerät zumindest zwei separate integrierte Schaltkreise, im Folgenden kurz als Chips bezeichnet. Diese sind ein Kommunikations-Chip und ein Applikations-Chip. Der Kommunikations-Chip ist mit der wenigstens einen Ethernet-Schnittstelle verbunden und zum Ausführen des Webservers, des Industrial Ethernet Protokoll-Stacks und der Applikationsschnittstelle ausgebildet, während der Applikations-Chip zum Ausführen einer mit der Applikationsschnittstelle verbindbaren Geräte-Applikation ausgebildet ist. Der Kommunikations-Chip kann ferner vorteilhaft einen Parametrierungsspeicher umfassen.

Durch den Einsatz getrennter Chips ist sichergestellt, dass die Industrial Ethernet Kommunikation die Applikation nicht beeinflusst.

Das oben genannte technische Problem wird ferner durch die Merkmale des Anspruchs 11 gelöst.

Danach ist ein Kommunikations-Chip zum Einsatz in einem Feldgerät wie oben beschrieben vorgesehen, welcher einen Webserver, einen Speicher mit einem darin gespeicherten Protokoll-Stack eines Industrial-Ethernet-Protokolls, und eine Applikations-Schnittstelle zur Kommunikation mit einer im Feldgerät ausgeführten Geräte-Applikation umfasst, wobei die Applikationsschnittstelle zur Kommunikation mit dem Webserver unter Verwendung des Protokoll-Stacks des Industrial Ethernet-Protokolls ausgebildet ist, und wobei insbesondere der gespeicherte Protokoll-Stack als PROFINET-Protokoll-Stack ausgebildet ist.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines webbasierten Zugriffs auf ein Feldgerät gemäß dem Stand der Technik, und
- Fig. 2: eine schematische Darstellung eines webbasierten Zugriffs auf ein Feldgerät gemäß einer bevorzugten Ausführungsform der Erfindung.

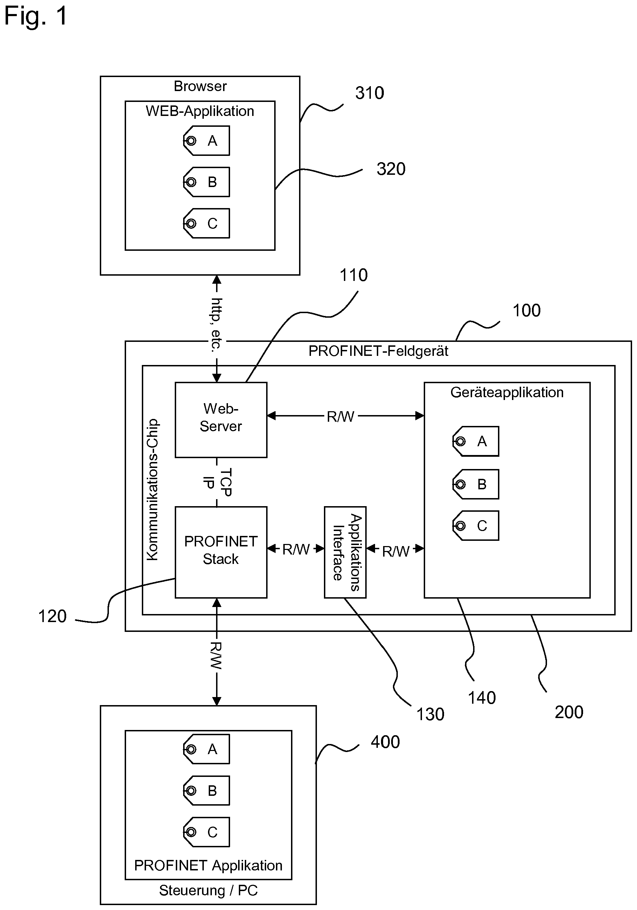

In dem in Fig. 1 dargestellten Beispiel eines aus dem Stand der Technik bekannten Feldgerätes 100 sind drei Parameter "A", "B" und "C" dargestellt, die zyklisch oder azyklisch von einer Steuerung 400 gelesen und geschrieben werden können. Zu diesem Zweck ist ein PROFINET-Stack 120 und eine Applikationsschnittstelle 130 vorgesehen. Ein Web-Zugriff auf das Feldgerät 100 erfolgt durch einen Web-Browser 310 mit einem entsprechenden Gegenstück in Form eines Webservers 110 auf der Geräteseite. In diesem Web-Browser 310 können, beispielsweise in einer Web-Applikation 320, die gleichen Parameter z.B. für Diagnose- oder Inbetriebnahmezwecke dargestellt werden. Zu diesem Zweck kommuniziert der Webserver 110 direkt mit der Geräteapplikation 140. Typischerweise sind die Komponenten 110, 120, 130 und 140 auf einem gemeinsamen Kommunikations-Chip 200 angeordnet.

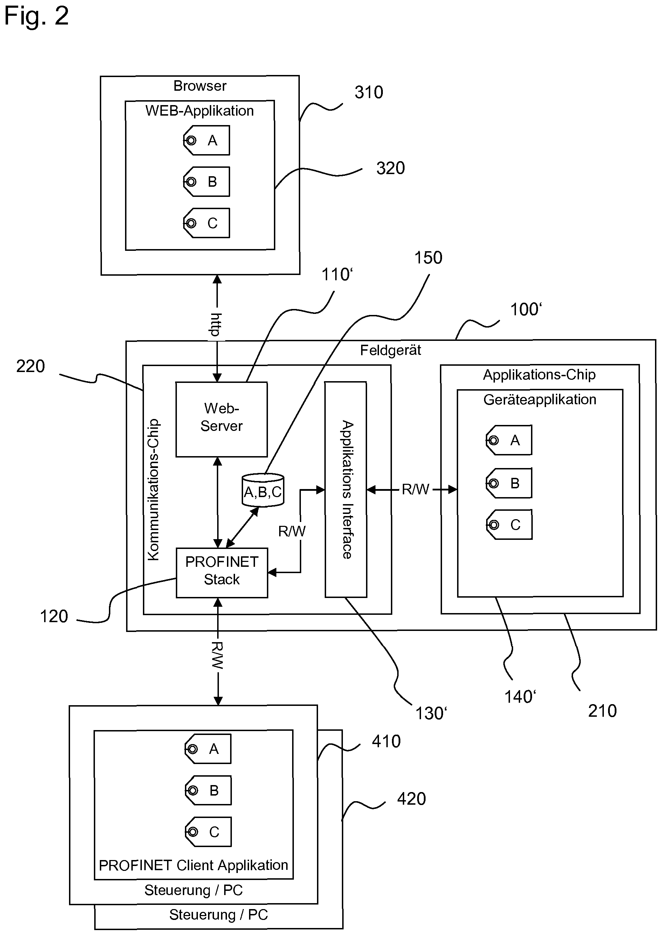

Bei dem in Fig. 2 dargestellten beispielhaften Feldgerät 100' wird hingegen die Trennung von Kommunikation und Applikation verfolgt, wobei insbesondere Kommunikationschips wie zum Beispiel der Tiger Chip der Firma Phoenix Contact zum Einsatz kommen.

Dabei läuft vorzugsweise ein PROFINET Stack 120 auf einem Kommunikationschip 220 und die Geräteapplikation 140' auf einem getrennten Chip 210 mit entsprechender Rechenleistung. Dadurch ist sichergestellt, dass die PROFINET-Kommunikation die Geräteapplikation nicht beeinflusst. Die PROFINET-Applikationsschnittstelle steht im dargestellten Ausführungsbeispiel an einer entsprechenden Hardwareschnittstelle des Chips 220 zur Verfügung. Über diese Schnittstelle kann die Geräteapplikation 140' ihre Parameter mit einer Steuerung oder einem PC 410 bzw. 420 über zyklische oder azyklische Dienste austauschen.

Da PROFINET den gleichzeitigen Zugriff auf ein Gerät von mehreren Steuerungen oder PCs 410 bzw. 420 ermöglicht, enthält jeder dieser sogenannten Clients an der für eine Kommunikation mit der Applikation 140' vorgesehenen Applikationsschnittstelle 130' eigene reservierte Bereiche, die ihn gegenüber der Applikation 140' identifizieren. Mit anderen Worten umfasst die Applikationsschnittstelle für jeden Client eine eigene logische Schnittstelle.

So gibt es zum Beispiel einen eigenen Bereich bzw. eine eigene logische Schnittstelle für jede zugreifende SPS und einen weiteren Bereich für einen sogenannten Supervisor, der zum Beispiel auf einem PC ausgeführt wird. Durch diese Bereiche können die jeweiligen Clients 410 bzw. 420 getrennte Zugriffe zur Applikation 140' realisieren. Im Folgenden sei angenommen, dass eine SPS 410 und ein auf einem PC ausgeführter Supervisor 420 vorgesehen sind.

Ein Kerngedanke der Erfindung besteht darin, auf dem Kommunikations-Chip 220 einen Webserver 110' auszuführen, der die herstellerspezifische Darstellung der Geräteparameter übernimmt. Durch Webtechniken wie zum Beispiel JavaScript ist es möglich, das Design unabhängig von der Darstellung der Parameterwerte zu hinterlegen.

Der Zugriff des Webservers 110' auf die Parameterwerte wird gegenüber der Geräteapplikation 140' wie der Zugriff eines weiteren PROFINET Clients, zum Beispiel des Supervisors, durch einen entsprechend eigenen Bereich dargestellt.

Ändert ein Anwender in einer im Web-Browser 310 ausgeführten Web-Applikation 320 zum Beispiel den Wert des Parameters "B", so wird der Applikation 140' der Wunsch nach einem Schreibzugriff des entsprechenden Parameters mitgeteilt. Gleiches gilt zum Beispiel für die einfache Darstellung des Wertes "A". In diesem Fall wird der Applikation 140' ein Lesezugriff für den entsprechenden Parameter signalisiert. Die Ausprägung dieser Zugriffe ist identisch zum Zugriff von anderen PROFINET-Clients.

Die Nutzung eines eigenen Bereichs in der Applikationsschnittstelle für den Web-Zugriff ist insbesondere auch für den Fall vorteilhaft, dass zum Beispiel zur Inbetriebnahme kein anderer Client wie eine SPS 410 oder ein Supervisor 420 vorhanden ist. Falls also keine SPS 410 oder Supervisor 420 auf das Gerät 100' zugreift, kann der Webserver 110' die vollständige Kontrolle übernehmen, ohne dass die Geräteapplikation 140' dafür spezielle Vorkehrungen treffen muss. Dies ermöglicht ein Nachrüsten der Web-Funktionalität im Kommunikations-Chip 220, ohne die Geräteapplikation 140' anpassen zu müssen.

Darüber hinaus ist es denkbar, dass die Geräteparameter auf dem Kommunikations-Chip 220 zum Beispiel in einer Datei 150 abgespeichert werden. Beim Hochlauf der Applikation 140' werden diese Parameter dann über entsprechende Write-Dienste an die Applikation 140' als Initialwerte übergeben und bei Änderungen konsistent gehalten. Hierdurch muss die Geräteapplikation 140' keine eigene Parameterspeicherung implementieren. Die Parameterdatei 150 kann auch über andere Ethernet Protokolle wie z.B. FTP auf andere Geräte gleichen Typs kopiert werden. Damit ist die einfache Versorgung weiterer Geräte mit den gleichen Parametern möglich.

Ferner ist eine Ausführungsform eines erfindungsgemäßen Feldgerätes denkbar, bei der Webserver 110', PROFINET-Stack 120 und Applikation 140' auf einem Kommunikations-Chip ausgeführt werden, d.h. keine getrennten Kommunikations-und Applikations-Chips vorgesehen sind.

Die Erfindung bietet eine Reihe von Vorteilen, insbesondere bei Verwendung getrennter Kommunikations- und Applikations-Chips.

So muss sich die Geräteapplikation nicht mit der Darstellung der Web-Inhalte auseinandersetzen. Der Applikationsentwickler benötigt daher keine tiefen Kenntnisse von Web-Techniken. Es werden zudem keine Speicher und Rechenressourcen der Applikation für die Ausführung des Webservers benötigt. Damit sind die Applikations-Chips möglichst preiswert und es gibt keine Wechselwirkungen mit der Geräteapplikation.

Ferner liegt die Verwaltung von Mehrfachzugriffen und Zugriffskonflikten im Kommunikations-Chip, so dass die Applikation dafür keine besonderen Maßnahmen ergreifen muss.

Die Darstellung der Webinhalte kann getrennt von der Geräteapplikation entwickelt und auch geändert werden, wenn die Geräteparameter schon über PROFINET zur Verfügung stehen. Das Nachrüsten eines Webinterface für bestehende Geräte und Applikationen ist somit einfach möglich.

Vorteilhaft kann über das Webinterface die vollständige Vor-Ort Inbetriebnahme eines Gerätes durchgeführt werden. Dabei werden Zugriffskonflikte mit einer anderen Client-Applikation durch den Kommunikations-Chip aufgelöst. Die PROFINET-Spezifikation enthält hier entsprechende Mechanismen, die zum Beispiel einer SPS signalisieren, dass die gewünschte Ressource von einem anderen Client belegt ist. Die Geräteapplikation muss hierfür keine besonderen Maßnahmen ergreifen.

Ferner ist eine stellvertretende Parameterspeicherung auf dem Kommunikations-Chip möglich, sowie eine einfache Übertragung von Parameterwerten auf andere Feldgeräte, ohne dass die Geräteapplikation dafür spezielle Maßnahmen ergreifen muss.

Auch ein Umstieg von IPV4 auf IPV6 ist ohne Einflüsse auf die Geräteapplikation möglich. Gleiches gilt für die sichere Datenübertragung wie z.B. https oder VPN-Tunneling.

## Patentansprüche

1. Verfahren zum Zugreifen auf ein Feldgerät (100'), welches an einen für ein Industrial Ethernet Protokoll ausgebildeten Feldbus angeschlossen ist, umfassend die Schritte:
- Übertragen einer Anfrage von einem Webbrowser (310), welcher in einem an den Feldbus angeschlossenen Bediengerät ausgeführt wird, zu einem im Feldgerät (100') ausgeführten Webserver (110'),
- Verarbeiten der empfangenen Anfrage im Feldgerät (100') unter Verwendung eines im Feldgerät (100') gespeicherten Protokoll-Stacks (120) des Industrial Ethernet-Protokolls, wobei das Verarbeiten der empfangenen Anfrage im Feldgerät (100') ein Weiterleiten der Anfrage vom Webserver (110') zu einer mit einer im Feldgerät ausgeführten Geräteapplikation (140') verbundenen Applikationsschnittstelle (130') über den Protokoll-Stack (120) des Industrial Ethernet-Protokolls und ein Übertragen einer Antwort auf die Anfrage von der Applikationsschnittstelle (130') über den Protokoll-Stack (120) des Industrial Ethernet-Protokolls zu dem Webserver (110') umfasst, wobei die Applikationsschnittstelle (130') eine dem Webserver (110') zugeordnete individuelle logische Schnittstelle umfasst und der Webserver (110') gegenüber der Applikationsschnittstelle (130') als Industrial Ethernet Client wirkt, und
- Übertragen einer Antwortinformation vom Webserver (110') zum Webbrowser (310).

2. Verfahren nach Anspruch 1, wobei das Verarbeiten der empfangenen Anfrage im Feldgerät (100')
- das Bereitstellen von Prozessdaten,
- das Einstellen wenigstens eines Parameters, und/oder
- das Erstellen, Bearbeiten und/oder Ausführen einer Funktion einer Geräte-Applikation (140') umfasst.

3. Verfahren nach einem der vorstehenden Ansprüche, wobei das Verarbeiten der empfangenen Anfrage im Feldgerät (100') das Zugreifen auf einen Parametrierungsspeicher (150) des Feldgerätes (100') umfasst.

4. Verfahren nach einem der vorstehenden Ansprüche, wobei als Industrial Ethernet Protokoll das PROFINET-Protokoll eingesetzt wird und der im Feldgerät (100') gespeicherte Protokoll-Stack (120) ein PROFINET-Protokoll-Stack ist.

5. Verfahren nach einem der vorstehenden Ansprüche, wobei die Antwortinformation vom Webserver (110') als Webseite bereitgestellt wird.

6. Feldgerät (100'), ausgebildet zum Betreiben an einem für ein Industrial Ethernet Protokoll ausgebildeten Feldbus, umfassend
- wenigstens eine Ethernet-Schnittstelle zum Anschließen an den Feldbus,
- einen mit der Ethernet-Schnittstelle verbundenen Webserver (110'),
- einen Speicher mit einem darin gespeicherten Protokoll-Stack (120) des Industrial-Ethernet-Protokolls,
- eine Applikations-Schnittstelle (130') zur Kommunikation mit einer auf dem Feldgerät (100') ausführbaren Geräte-Applikation (140'), wobei die Applikationsschnittstelle (130') zur Kommunikation mit dem Webserver (110') unter Verwendung des im Feldgerät (100') gespeicherten Protokoll-Stacks (120) des Industrial Ethernet-Protokolls ausgebildet ist, und wobei die Applikationsschnittstelle (130') eine dem Webserver (110') zugeordnete individuelle logische Schnittstelle umfasst und dazu ausgebildet ist, mit dem Webserver (110') als Industrial Ethernet Client zu kommunizieren.

7. Feldgerät nach Anspruch 6, wobei der gespeicherte Protokoll-Stack (120) ein PROFINET-Protokoll-Stack ist.

8. Feldgerät nach einem der Ansprüche 6 oder 7, wobei der Webserver (110') dazu ausgebildet ist, Anfragen von einem Webbrowser (310) zu empfangen eine Antwortinformation in Form einer Webseite bereitzustellen.

9. Feldgerät nach einem der Ansprüche 6 bis 8, umfassend einen mit der wenigstens einen Ethernet-Schnittstelle verbundenen Kommunikations-Chip (220) und einen Applikations-Chip (210), wobei der Kommunikations-Chip (220) zum Ausführen des Webservers (110'), des Industrial Ethernet Protokoll-Stacks (120) und der Applikationsschnittstelle (130') und der Applikations-Chip (210) zum Ausführen einer mit der Applikationsschnittstelle (130') verbindbaren Geräte-Applikation (140') ausgebildet ist.

10. Feldgerät nach einem der Ansprüche 6 bis 9, wobei der Kommunikations-Chip (220) ferner einen Parametrierungsspeicher (150) umfasst.

11. Kommunikations-Chip (220) zum Einsatz in einem Feldgerät (100') gemäß einem der Ansprüche 6 bis 10, umfassend
- einen Webserver (110'),
- einen Speicher mit einem darin gespeicherten Protokoll-Stack (120) eines Industrial-Ethernet-Protokolls, und
- eine Applikationsschnittstelle (130') zur Kommunikation mit einer im Feldgerät ausgeführten Geräte-Applikation (140'), wobei die Applikationsschnittstelle (130') zur Kommunikation mit dem Webserver (110') unter Verwendung des Protokoll-Stacks (120) des Industrial Ethernet-Protokolls ausgebildet ist, und wobei die Applikationsschnittstelle (130') eine dem Webserver (110') zugeordnete individuelle logische Schnittstelle umfasst und dazu ausgebildet ist, mit dem Webserver (110') als Industrial Ethernet Client zu kommunizieren.

12. Kommunikations-Chip nach Anspruch 11, wobei der gespeicherte Protokoll-Stack (120) ein PROFINET-Protokoll-Stack ist.

## Claims

1. A method for accessing a field device (100') which is connected to a field bus adapted for an Industrial Ethernet protocol, comprising the steps of:
- transmitting a request from a web browser (310) to a web server (110') implemented in the field device (100'), said web browser being executed in an operation device connected to the field bus,
- processing the received request in the field device (100') by using a protocol stack (120) of the Industrial Ethernet protocol, said protocol stack being stored in the field device (100'), wherein the processing of the received request in the field device (100') comprises forwarding the request from the web server (110'), via the protocol stack (120) of the Industrial Ethernet protocol, to an application interface (130') which is connected to a device application (140') executed in the field device, and transmitting a response to the request from the application interface (130') to the web server (110') via the protocol stack (120) of the Industrial Ethernet protocol, wherein the application interface (130') comprises an individual logical interface associated with the web server (110') and the web server (110') acts as an Industrial Ethernet client vis-a-vis the application interface (130'), and
- transmitting response information from the web server (110') to the web browser (310).

2. The method as claimed in claim 1, wherein the processing of the received request in the field device (100') comprises
- providing process data,
- adjusting at least one parameter, and/or
- creating, editing and/or executing a function of a device application (140').

3. The method as claimed in any of the preceding claims, wherein the processing of the received request in the field device (100') comprises accessing a parameterization memory (150) of the field device (100').

4. The method as claimed in any of the preceding claims, wherein the PROFINET protocol is used as the Industrial Ethernet protocol, and wherein the protocol stack (120) stored in the field device (100') is a PROFINET protocol stack.

5. The method as claimed in any of the preceding claims, wherein the response information is provided by the web server (110') in form of a web page.

6. A field device (100') configured for being operated on a field bus adapted for an Industrial Ethernet protocol, comprising
- at least one Ethernet interface for being connected to the field bus,
- a web server (110') connected to the Ethernet interface,
- a memory having a protocol stack (120) of the Industrial Ethernet protocol stored therein,
- an application interface (130') for communicating with a device application (140') executable on the field device (100'), wherein the application interface (130') is adapted to communicate with the web server (110') using the protocol stack (120) of the Industrial Ethernet protocol stored in the field device (100'), and wherein the application interface (130') comprises an individual logical interface associated with the web server (110') and is adapted for communicating with the web server (110') as an Industrial Ethernet client.

7. The field device as claimed in claim 6, wherein the stored protocol stack (120) is a PROFINET protocol stack.

8. The field device as claimed in any of claims 6 or 7, wherein the web server (110') is adapted to receive requests from a web browser (310) and to provide response information in form of a web page.

9. The field device as claimed in any of claims 6 to 8, comprising a communication chip (220) connected to the at least one Ethernet interface, and an application chip (210), wherein the communication chip (220) is adapted to execute the web server (110'), the Industrial Ethernet protocol stack (120) and the application interface (130'), and the application chip (210) is adapted to execute a device application (140') connectable to the application interface (130').

10. The field device as claimed in any of claims 6 to 9, wherein the communication chip (220) further comprises a parameterization memory (150).

11. A communication chip (220) for use in a field device (100') as claimed in any of claims 6 to 10, comprising
- a web server (110'),
- a memory having a protocol stack (120) of an Industrial Ethernet protocol stored therein, and
- an application interface (130') for communicating with a device application (140') executed in the field device, wherein the application interface (130') is adapted to communicate with the web server (110') using the protocol stack (120) of the Industrial Ethernet protocol, and wherein the application interface (130') comprises an individual logical interface associated with the web server (110') and is adapted for communicating with the web server (110') as an Industrial Ethernet client.

12. The communication chip as claimed in claim 11, wherein the stored protocol stack (120) is a PROFINET protocol stack.

## Revendications

1. Procédé d'accès à un appareil de terrain (100'), lequel est connecté à un bus de terrain réalisé pour un protocole Ethernet industriel, comprenant les étapes consistant à :
- transmettre une demande d'un navigateur Web (310), lequel est réalisé dans un appareil de commande connecté au bus de terrain, à un serveur Web (110') réalisé dans l'appareil de terrain (100'),
- traiter la demande reçue dans l'appareil de terrain (100') au moyen d'une pile de protocoles (120), mise en mémoire dans l'appareil de terrain (100'), du protocole Ethernet industriel, où le traitement de la demande reçue dans l'appareil de terrain (100') comprend un transfert de la demande du serveur Web (110') à une interface d'application (130') reliée à une application d'appareil (140') réalisée dans l'appareil de terrain par l'intermédiaire de la pile de protocoles (120) du protocole Ethernet industriel et une transmission d'une réponse à la demande de l'interface d'application (130') par l'intermédiaire de la pile de protocoles (120) du protocole Ethernet industriel au serveur Web (110'), où l'interface d'application (130') comprend une interface logique individuelle associée au serveur Web (110') et le serveur Web (110') agit par rapport à l'interface d'application (130') comme client Ethernet industriel, et
- transmettre une information de réponse du serveur Web (110') au navigateur Web (310).

2. Procédé selon la revendication 1, dans lequel le traitement de la demande reçue dans l'appareil de terrain (100') comprend
- la fourniture de données de processus,
- le réglage d'au moins un paramètre, et/ou
- l'élaboration, la modification et/ou l'exécution d'une fonction d'une application d'appareil (140').

3. Procédé selon l'une quelconque des revendications précédentes, dans lequel le traitement de la demande reçue dans l'appareil de terrain (100') comprend l'accès à une mémoire de paramétrage (150) de l'appareil de terrain (100') .

4. Procédé selon l'une quelconque des revendications précédentes, dans lequel le protocole PROFINET est utilisé comme protocole Ethernet industriel et la pile de protocoles (120) mise en mémoire dans l'appareil de terrain (100') est une pile de protocoles PROFINET.

5. Procédé selon l'une quelconque des revendications précédentes, dans lequel l'information de réponse est fournie par le serveur Web (110') en tant que page Web.

6. Appareil de terrain (100'), réalisé pour fonctionner sur un bus de terrain réalisé pour un protocole Ethernet industriel, comprenant
- au moins une interface Ethernet à connecter au bus de terrain,
- un serveur Web (110') relié à l'interface Ethernet,
- une mémoire avec une pile de protocoles (120) du protocole Ethernet industriel mise en mémoire dans celle-ci,
- une interface d'application (130') destinée à communiquer avec une application d'appareil (140') pouvant être exécutée sur l'appareil de terrain (100'), où l'interface d'application (130') est réalisée pour communiquer avec le serveur Web (110') au moyen de la pile de protocoles (120) du protocole Ethernet industriel mise en mémoire dans l'appareil de terrain (100'), et où l'interface d'application (130') comprend une interface logique individuelle associée au serveur Web (110') et est réalisée pour communiquer avec le serveur Web (110') en tant que client Ethernet industriel.

7. Appareil de terrain selon la revendication 6, dans lequel la pile de protocoles (120) mise en mémoire est une pile de protocoles PROFINET.

8. Appareil de terrain selon l'une quelconque des revendications 6 ou 7, dans lequel le serveur Web (110') est réalisé pour recevoir des réponses d'un navigateur Web (310), pour fournir une information de réponse sous forme d'une page web.

9. Appareil de terrain selon l'une quelconque des revendications 6 à 8, comprenant une puce de communication (220) reliée à l'au moins une interface Ethernet et une puce d'application (210), dans lequel la puce de communication (220) est réalisée pour exécuter le serveur Web (110'), la pile de protocoles Ethernet industriel (120) et l'interface d'application (130') et la puce d'application (210) pour exécuter une application d'appareil (140') pouvant être reliée à l'interface d'application (130').

10. Appareil de terrain selon l'une quelconque des revendications 6 à 9, dans lequel la puce de communication (220) comprend en outre une mémoire de paramétrage (150).

11. Puce de communication (220) destinée à être insérée dans un appareil de terrain (100') selon l'une quelconque des revendications 6 à 10, comprenant
- un serveur Web (110'),
- une mémoire avec une pile de protocoles (120) d'un protocole Ethernet industriel mise en mémoire dans celle-ci, et
- une interface d'application (130') destinée à communiquer avec une application d'appareil (140') exécutée dans l'appareil de terrain, où l'interface d'application (130') est réalisée pour communiquer avec le serveur Web (110') au moyen de la pile de protocoles (120) du protocole Ethernet industriel, et où l'interface d'application (130') comprend une interface logique individuelle associée au serveur Web (110') et est réalisée pour communiquer avec le serveur Web (110') en tant que client Ethernet industriel.

12. Puce de communication selon la revendication 11, dans laquelle la pile de protocoles (120) mise en mémoire est une pile de protocoles PROFINET.
